# EUROPÄISCHE PATENTSCHRIFT

(11) **EP 1 737 629 B1**
(45) Veröffentlichungstag und Bekanntmachung des Hinweises auf die Patenterteilung: **06.07.2011**
(21) Anmeldenummer: 05730714.2
(22) Anmeldetag: 05.04.2005
(51) Int. Cl.: B26D 3/18, B26D 7/06, A47J 43/25

(54) **WÜRFELREIBE**
CUBE GRATER
RAPE POUR CUBES

(30) Priorität: 06.04.2004 DE 102004017334; 23.11.2004 DE 102004056405; 17.01.2005 DE 102005002329; 25.01.2005 US 646926 P; 08.02.2005 DE 102005005821
(43) Veröffentlichungstag der Anmeldung: 03.01.2007
(73) Patentinhaber: LEIFHEIT Aktiengesellschaft, 56377 Nassau (DE)
(72) Erfinder: KLOTZ, Markus, 56357 Hainau (DE); SCHRAMM, Benjamin, 65558 Eppenrod (DE); KLANT, Keesjan, 9053 Teufen (CH)
(74) Vertreter: Bungartz, Klaus Peter
(86) Internationale Anmeldenummer: PCT/EP2005/003567
(87) Internationale Veröffentlichungsnummer: WO 2005/097436

(56) Entgegenhaltungen:
- DE-C- 663 782
- DE-C- 844 651
- DE-U1- 9 201 765
- FR-A- 597 349

## Beschreibung

Die Erfindung betrifft Vorrichtung zum Zerkleinern von Nahrungsmitteln mit einer Gleitbahn, auf der zum Ausführen eines Zerkleinerungsvorganges ein zu zerkleinerndes Gut abwechselnd in einer Hin- und Rückbewegung verschiebbar ist, und mit zumindest einem senkrecht zur Gleitbahn angeordneten Schneidmesser, über das das zu zerkleinernde Gut führbar und dadurch einschneidbar ist, wobei das zumindest eine Schneidmesser doppelschneidig ausgebildet ist, so dass das zu zerkleinernde Gut sowohl bei der Hinbewegung, als auch bei der Rückbewegung einschneidbar ist.

Die DE 2 816 929 A1 zeigt eine Vorrichtung zum Zerkleinern von Nahrungsmitteln bestehend aus einer mit einem Handgriff versehenen länglichen Grundplatte, über deren Oberfläche das zu zerkleinernde Gut von Hand hin und her bewegbar ist. Im mittleren Bereich weist die Vorrichtung ein austauschbares Zerkleinerungsblech auf.

Aus der DE 663 782 B1 ist eine Vorrichtung zum Schneiden von Zwiebeln, Kartoffeln und dergleichen in würfelartige Stücke bekannt. Die Vorrichtung weist zwei Kämme von senkrecht zu einer Gleitbahn angeordneten Streifenmessern und ein Abschneidmesser auf. Zwischen den Kämmen von Streifenmessern ist eine Drehvorrichtung zum Drehen des Schneidguts angeordnet. Zur Ingebrauchnahme der Vorrichtung wird das Schneidgut über den ersten Kamm von Streifenmessern geführt. Anschließend wird das Schneidgut von der Drehvorrichtung gedreht und dann über den zweiten Kamm von Streifenmessern geführt. Schließlich werden die eingeschnittenen Teile des Schneidguts von dem Abschneidmesser getrennt. Die Vorrichtung hat den erheblichen Nachteil einer enormen Baugröße. Hierdurch ist die Vorrichtung äußerst unhandlich. Insbesondere im Haushaltsbereich ist es üblich, die Vorrichtung zum Zerkleinern, wie beispielsweise eine Reibe, während der Benutzung auf den Rand eines Auffanggefäßes aufzulegen. Dies ist mit der bekannten, notwendigerweise sehr langen Vorrichtung bei üblichen Haushaltsgefäßgrößen nicht möglich.

Aus der DE 844 651 C ist eine gattungsbildende Vorrichtung zum Zerkleinern von Nahrungsmitteln bekannt. Diese Vorrichtung umfasst eine Gleitbahn, auf der zum Ausführen eines Zerkleinerungsvorgangs ein zu zerkleinerndes Gut abwechselnd in einer Hin- und Rückbewegung verschiebbar ist. Senkrecht zur Gleitbahn ist ein Schneidmesser angeordnet, weiches über das zu zerkleinernde Gut führbar ist. Dadurch wird das Gut eingeschnitten. Das Schneidmesser ist doppelseitig ausgebildet, so dass das zu zerkleinernde Gut in beiden Bewegungsrichtungen geschnitten wird, nämlich sowohl bei der Hinbewegung als auch bei der Rückbewegung des Schneidmessers. Des Weiteren ist eine Drehvorrichtung vorgesehen, die das zu zerkleinernde Gut nach dem Schneidvorgang der Hinbewegung und vor dem Schneidvorgang der Rückbewegung dreht. Die Drehvorrichtung ist manuell zu betätigen. Dies ist mühevoll und daher nachteilig.

Aus der FR 597 349 A ist ebenfalls eine Vorrichtung zum Zerkleinern von Nahrungsmitteln bekannt, wobei dort die Dicke der durch das Schneiden zu erzeugenden Würfel einstellbar ist.

Auch aus der DE 92 01 765 UI ist eine Vorrichtung zum Zerkleinern von Nahrungsmitteln bekannt. Auch hier lässt sich die Schneiddicke, d.h. die Dicke des zu zerkleinernden Schneidguts, einstellen.

Der Erfindung liegt die Aufgabe zugrunde, die eine Vorrichtung zum Zerkleinern von Nahrungsmitteln anzugeben, die eine kompakte Bauweise aufweist.

Die Aufgabe wird durch eine Vorrichtung mit den Merkmalen des Patentanspruchs 1 gelöst. Diese Vorrichtung ist dadurch gekennzeichnet, dass eine Drehvorrichtung vorgesehen ist, die das zu zerkleinernde Gut und/oder einen Halter des zu zerkleinernden Guts nach dem Schneidvorgang der Hinbewegung und vor dem Schneidvorgang der Rückbewegung automatisch dreht.

Es wird sowohl die Hin- als auch die Rückbewegung zum Zerkleinern des Schneidgutes genutzt. Die erforderliche Länge der Gleitbahn ist daher gegenüber der aus dem Stand der Technik bekannten Würfelschneidvorrichtung erheblich reduziert. Darüber hinaus ist bei der erfindungsgemäßen Vorrichtung eine geringere Zahl von Schneidmessern erforderlich. Die Vorrichtung ist daher mit geringerem Materialaufwand herstellbar und leichter zu reinigen, da weniger Bauelemente erforderlich sind.

Vorzugsweise dreht die Drehvorrichtung das zu zerkleinernde Gut um eine Drehachse, die einen rechten Winkel zur Gleitbahn aufweist. Während der Hinbewegung erfolgt ein erstes Einschneiden des zu zerkleinernden Guts durch die senkrecht zur Gleitbahn angeordneten Schneidmesser. Schneidmesser dieser Art sind auch unter der Bezeichnung Streifenmesser oder Alligatormesser bekannt. Nach dem Schneidvorgang der Hinbewegung wird das zu zerkleinernde Gut durch die Drehvorrichtung vorzugsweise um 90 Grad - automatisch - gedreht, so dass bei der Rückbewegung ein zweites Einschneiden des zu zerkleinernden Guts erfolgen kann. Nach dem Schneidvorgang der Rückbewegung weist das zu zerkleinernde Gut an der auf die Gleitbahn gerichteten Seite ein gitterförmiges Einschnittmuster auf. Wenn, was auch vorteilhaft sein kann, die Drehvorrichtung das zu zerkleinernde Gut um einen anderen Winkel als 90 Grad dreht, ist das Einschnittmuster rautenförmig. Die eingeschnittenen Teile des zu zerkleinernden Guts können dann mit einem parallel zur Gleitbahn angeordneten Abschneidmesser abgetrennt werden.

Besonders vorteilhaft ist, dass ein Halter für das zu zerkleinernde Gut vorgesehen ist. Der Halter ist vorzugsweise geführt über die Gleitbahn bewegbar, wobei eine Führung beispielsweise aus an die Gleitbahn angrenzenden Seitenwangen bestehen kann, die ein seitliches Herabgleiten des Halters und/oder des zu zerkleinernden Guts von der Gleitbahn verhindern. In einer Variante könnte der Halter beispielsweise auch so ausgebildet sein, dass er die seitlichen Ränder der Gleitbahn umgreift.

Erfindungsgemäß dreht die Drehvorrichtung das zu zerkleinernde Gut zusammen mit dem Halter oder zumindest mit Teilen des Halters. Vorzugsweise weist der Halter einen Einführschacht auf, in den das zu zerkleinernde Gut einführbar und den Schneidmessern zuführbar ist. Vorzugsweise ist ein ebenfalls in den Einführschacht einführbarer Andrückstempel vorgesehen, mit dem das zu zerkleinernde Gut auf die Gleitbahn gedrückt werden kann.

In einer speziellen bevorzugten Ausgestaltungsform greift die Drehkraft der Drehvorrichtung am Einführschacht des Halters an, so dass dieser von der Drehvorrichtung gedreht wird. Um zu vermeiden, dass lediglich der Einführschacht, nicht jedoch das zu zerkleinernde Gut, gedreht wird, kann beispielsweise der Andrückstempel mit einer Führungsnase ausgerüstet sein, die in einer Führungsnut des Einführschachts läuft. Auf diese Weise ist sichergestellt, dass der Andrückstempel stets mitgedreht wird. Darüber hinaus kann der Andrückstempel Aufspießnadeln aufweisen, die eine sichere Verkopplung mit dem zu zerkleinernden Gut gewährleisten.

In einer besonders bevorzugten Ausgestaltungsvariante weist der Halter und/oder weisen Teile des Halters eine Zahnung, die beispielsweise als umlaufender Zahnkranz ausgeführt sein kann, auf. Vorzugsweise, zumindest während des Drehvorgangs, greift eine Zahnstange in die Zahnung des Halters ein. Vorzugsweise ist die Zahnstange relativ zur Gleitbahn und/oder relativ zum Halter beweglich angeordnet. In einer besonderen Variante ist die Zahnstange gemeinsam zumindest zeitweise zusammen mit dem Halter relativ zur Gleitbahn bewegbar. Es kann eine Arretierungsvorrichtung vorgesehen sein, die die Zahnstange zumindest zeitweise relativ zur Gleitbahn fixiert:

In einer besonderen Variante ist vorgesehen, dass die Zahnstange während des Schneidvorgangs der Hinbewegung zusammen mit dem Halter über die Gleitbahn geführt wird. Anschließend wird die Zahnstange durch eine erste Arretierungsvorrichtung relativ zur Gleitbahn zeitweise fixiert, so dass der Zahnkranz des bewegten Halters auf der fixierten Zahnstange "abrollt", wodurch die Drehung des Halters und damit des zu zerkleinernden Guts bewirkt wird. Nach erfolgter Drehung des zu zerkleinernden Guts wird die Arretierungsvorrichtung, beispielsweise durch eine vorspringende Nase im drehenden Teil des Halters, wieder gelöst. Die Arretierungsvorrichtung ist vorzugsweise so ausgeführt, dass sie während der nachfolgenden Rückbewegung die Zahnstange nicht arretiert, da sonst die Drehung des zu zerkleinernden Guts vorzeitig rückgängig gemacht würde. Erst nach dem erfolgten Schneidvorgang der Rückbewegung kann beispielsweise durch eine weitere Arretierungsvorrichtung die Zahnstange an anderer Stelle der Gleitbahn wieder arretiert werden, um nach dem Schneidvorgang der Rückbewegung und vor dem Schneidvorgang der Hinbewegung das zu zerkleinernde Gut wieder zu drehen.

Erfindungsgemäß dreht die Drehvorrichtung das zu zerkleinernde Gut und/oder den Halter des zu zerkleinernden Guts automatisch. Dabei kann sich der Benutzer ausschließlich auf das Ausführen der Hin- und der Rückbewegung konzentrieren. Der Halter des zu zerkleinernden Guts ist vorzugsweise so ausgeführt, dass keinerlei Drehkräfte auf die Hand des Benutzers ausgeübt werden. Hierzu kann eine die sich drehenden Teile abdeckende Schneidglocke vorgesehen sein, die hinsichtlich der Drehbewegung von den sich drehenden Teilen entkoppelt ist und an der der Benutzer anfassen kann.

Die Drehvorrichtung stellt in einer bevorzugten Ausführungsvariante die Drehstellung des zu zerkleinernden Guts in Abhängigkeit von der Position des zu zerkleinernden Guts und/oder des Halters des zu zerkleinernden Guts relativ zur Gleitbahn ein. Es kann auch vorgesehen sein, dass die Drehvorrichtung die Drehstellung des zu zerkleinernden Guts in Abhängigkeit von der Bewegungsrichtung des zu zerkleinernden Guts und/oder des Halters des zu zerkleinernden Guts einstellt.

In einer besonderen Ausführungsform ist die Vorrichtung zum Zerkleinern von Nahrungsmitteln als Reibe, insbesondere als Würfelreibe, und/oder als Hobel ausgebildet ist.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:

Das zumindest eine Schneidmesser und/oder das Abschneidmesser ist/sind als austauschbare Schneidmodule ausgebildet.
- Fig. 1 bis 5: den Ablauf von Hin- und Rückbewegung zum Würfelschneiden mit einer erfindungsgemäßen Vorrichtung zum Zerkleinern von Nahrungsmitteln,
- Fig. 6: die weitere erfindungsgemäße Vorrichtung zum Zerkleinern von Nahrungsmitteln und
- Fig. 7: die weitere erfindungsgemäße Vorrichtung zum Zerkleinern von Nahrungsmitteln von unten.

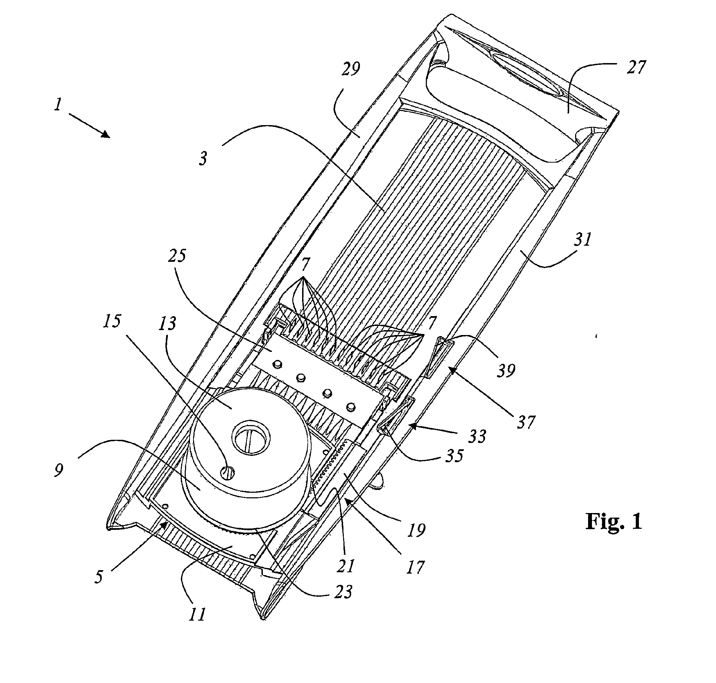

Figur 1 zeigt eine Vorrichtung 1 zum Zerkleinern von Nahrungsmitteln mit einer Gleitbahn 3, auf der zum Ausführen eines Zerkleinerungsvorgangs ein (nicht gezeigtes) zu zerkleinerndes Gut mit einer Halter 5 abwechselnd in einer Hin- und Rückbewegung verschiebbar ist. Die Vorrichtung weist mehrere senkrecht zur Gleitbahn 3 angeordnete Schneidmesser 7 auf, über die das zu zerkleinernde Gut führbar und dadurch einschneidbar ist. Die Schneidmesser 7 sind doppelschneidig ausgebildet, so dass das zu zerschneidende Gut sowohl bei der Hinbewegung als auch bei der Rückbewegung einschneidbar ist. Der Halter 5 für das zu zerkleinernde Gut weist eine Anfasshülse 9 auf, in der ein in dieser Figur nicht sichtbarer Einführschacht relativ zur Grundplatte 11 des Halters drehbar gelagert ist.

Der Halter 5 weist darüber hinaus einen Nachdrückstempel 13 auf, der in den Einführschacht einführbar ist und derart ausgeführt ist, dass er sich beim Einführen in den Einführschacht mechanisch mit dem Einführschacht verkoppelt und somit sich mit diesem dreht. Die Drehstellung des Einführschachtes, des Nachdrückstempels und damit des zu zerkleinernden Guts kann man in dieser Figur und in den nachfolgenden vier Figuren an der Stellung der Markierung 15 erkennen.

Die Vorrichtung 1 zum Zerkleinern von Nahrungsmitteln weist eine Drehvorrichtung 17 zum Drehen des zu zerkleinernden Guts um eine zur Gleitbahn senkrechte Achse auf. Die Drehvorrichtung 17 beinhaltet eine Zahnstange 19, die zusammen mit dem Halter 5 in Richtung der Hin- und in Richtung der Rückbewegung geführt wird. Die Zahnstange 19 ist sowohl relativ zur Gleitbahn 3 als auch relativ zur Grundplatte 11 in Richtung der Hin- und in Richtung der Rückbewegung beweglich angeordnet. Die Zähne 21 der Zahnstange 19 greifen in einen Zahnkranz 23 des Einführschachts des Halters 5 ein.

In Figur 1 ist auch deutlich ein Abschneidmesser 25 zu sehen, das bei der gezeigten Stellung des Halters 5 relativ zur Gleitbahn, jedoch in einer Neutralstellung, versenkt ist. Ist eine Umschaltvorrichtung vorgesehen, wird das Abschneidmesser 25 zum Abschneiden der eingeschnittenen Teile des zu zerschneidenden Gutes in eine Schneidstellung überführt. Die Vorrichtung 1 zum Zerkleinern von Nahrungsmitteln weist außerdem einen Handgriff 27 auf. Der Halter 5 ist während der Hin-und Herbewegung von den Seitenwangen 29 und 31 seitlich geführt. Die Hinbewegungsrichtung ist die Bewegungsrichtung auf den Handgriff 27 zu, während die Rückbewegungsrichtung die Richtung entlang der Gleitbahn vom Handgriff 27 weg sein soll.

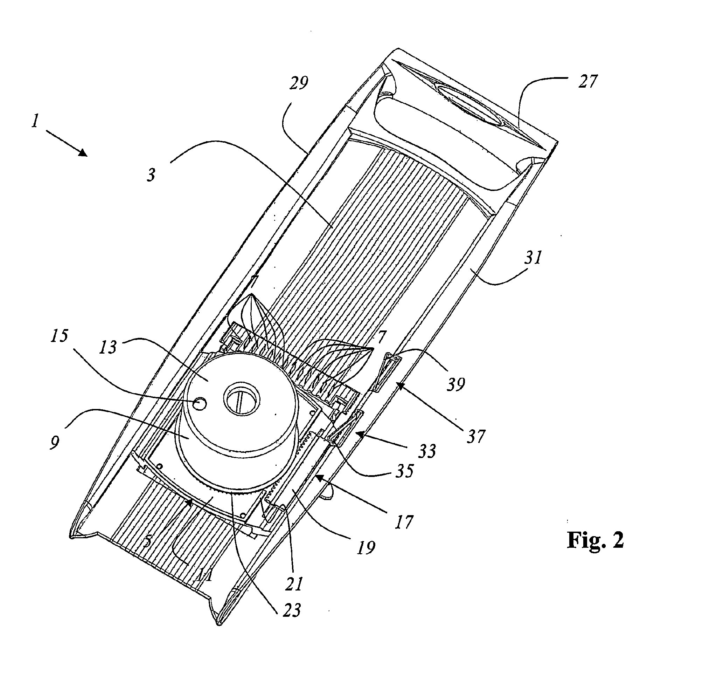

Figur 2 zeigt die bereits bezüglich Figur 1 beschriebene Vorrichtung 1 zum Zerkleinern von Nahrungsmitteln in einer anderen Stellung des Halters 5 während der Hinbewegung. Die Vorrichtung 1 zum Zerkleinern von Nahrungsmitteln ist derart ausgeführt, dass die Drehvorrichtung 17 das zu zerkleinernde Gut sowohl nach dem Schneidvorgang der Hinbewegung als auch nach dem Schneidvorgang der Rückbewegung jeweils um 90 Grad dreht. In Figur 2 ist gezeigt, dass die Zahnstange 19 bei der Hinbewegung auf die Schneidmesser 7 zu von einer Arretierungsvorrichtung 33, die als Federbügel 35 ausgeführt ist, am weiteren Fortbewegen in der Hinrichtung gehindert wird. Der weiterhin in die Hinrichtung bewegte Einführschacht mit dem Zahnkranz 23, der in die Zähne 21 der Zahnstange 19 eingreift, rollt gewissermaßen auf der Zahnstange 21 ab und wird dadurch gemeinsam mit dem Nachdrückstempel und dem zu zerkleinernden Gut gedreht. Nach erfolgter Drehung wird der Federbügel 35 von einem nicht gezeigten Element des Einführschachts zur Seitenwange 31 hin weggedrückt, so dass die Zahnstange 19 wieder freigegeben wird und sich gemeinsam mit dem Halter 5 in der Hinrichtung bewegen kann.

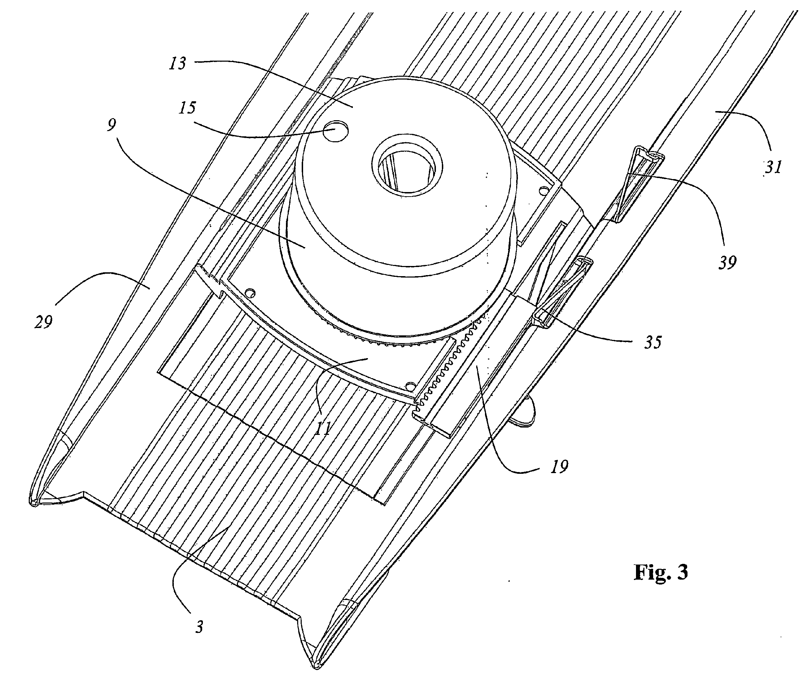

Die Stellung kurz nach der Freigabe der Zahnstange 19 ist in Figur 3 gezeigt. Dort ist deutlich zu sehen, dass der Federbügel 35 in Richtung der Seitenwange 31 weggedrückt ist und die Zahnstange 19 am Federbügel entlang gleiten kann, so dass sie durch diesen nicht mehr arretiert ist.

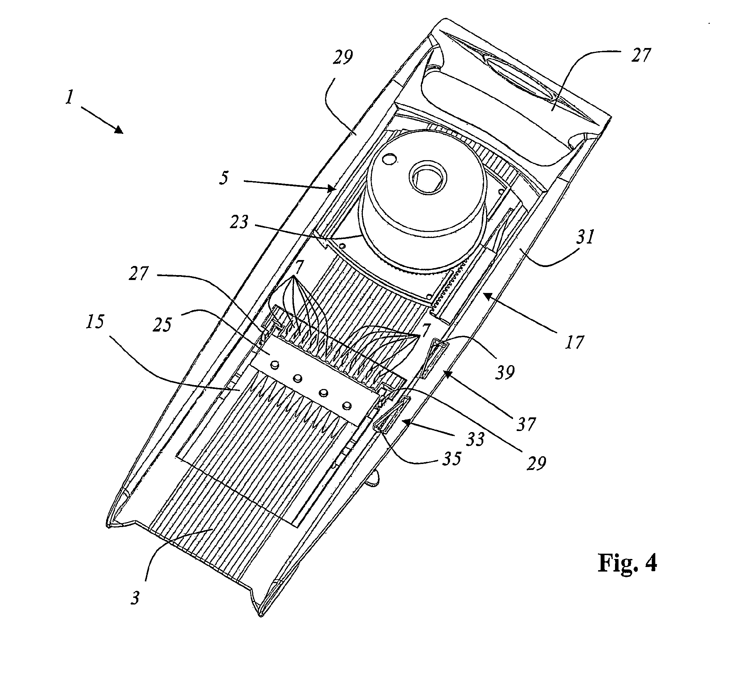

Figur 4 zeigt die Vorrichtung 1 zum Zerkleinern von Nahrungsmitteln unmittelbar vor dem Einleiten der Rückbewegung (d.h. vom Handgriff 27 weg). Während der Rückbewegung wird die Zahnstange 19 von einem weiteren Arretierungsmittel 37, das aus einem weiteren Federbügel 39 besteht, in ihrer Bewegung gestoppt, so dass der Einführschacht samt dem Nachdrückstempel 13 und dem zu zerkleinernden Gut, diesmal in entgegengesetzter Richtung, auf ihr abrollen kann, was letztlich eine Drehung des zu zerkleinernden Gutes bewirkt, bevor der Schneidvorgang der Rückbewegung erfolgt. Das Resultat ist ein, aus Richtung der Gleitbahn betrachtet, kreuzgitterförmig eingeschnittenes Schneidgut.

Wie bereits erwähnt, weist die Vorrichtung 1 zum Zerkleinern von Nahrungsmitteln eine Umschaltvorrichtung zum Umschalten des Abschneidmessers 25 von einer Neutralstellung in eine Schneidstellung (und wieder zurück) auf. Die Umschaltvorrichtung beweist einen ersten Umschalthebel 27 und einen zweiten Umschalthebel 29 auf, der durch die Grundplatte 11 des Halters 5 bedient wird. Die Umschalthebel 27, 29 sind derart mechanisch mit dem Abschneidmesser 25 verkoppelt, das dieses automatisch von der Neutralstellung in die Schneidstellung wechselt, wenn die Grundplatte 11 des Halters 5 die Umschalthebel 27, 29 in der Rückbewegung umlegt. Die Umschalthebel 27, 29 der Umschaltvorrichtung weisen einen Freilauf auf, so dass keine Umschaltung des Abschneidmessers 25 von der Neutralstellung in die Schneidstellung erfolgt, wenn der Halter 5 in Hinrichtung, also zum Handgriff 27 hin, bewegt wird.

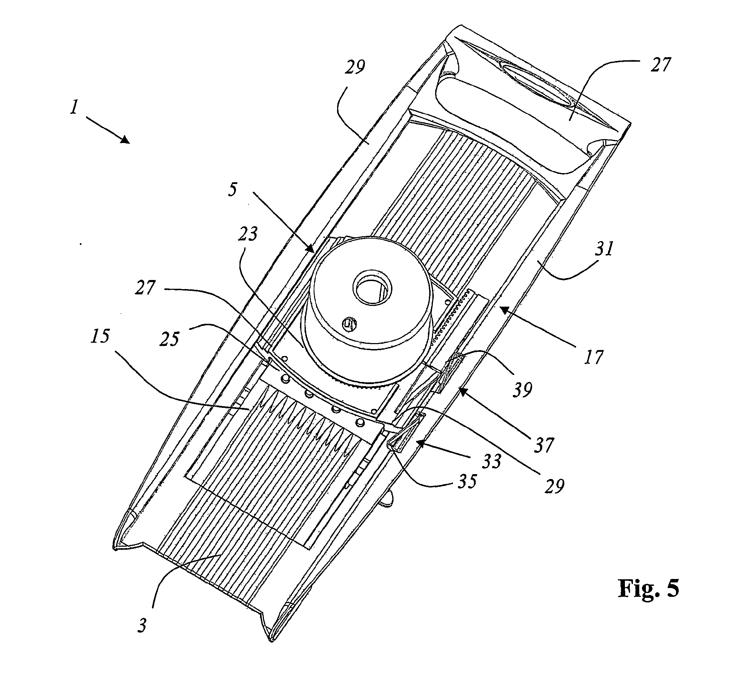

Figur 5 zeigt die bereits beschriebene erfindungsgemäße Vorrichtung 1 zum Zerkleinern von Nahrungsmitteln bei fortgeschrittener Rückbewegungsstellung. In dieser Position ist die weitere Arretierungsvorrichtung 37 von einem Mittel zum Freigeben, das in dieser Figur nicht zu sehen ist, wieder gelöst, so dass die Zahnstange 19 sich gemeinsam mit dem Halter 5 bewegt und an dem weiteren Federbügel 39 entlang gleitet. Während der Rückbewegung wird die Arretierungsvorrichtung 33 die Zahnstange 19 nicht stoppen, da der Federbügel 35 eine Anlaufschräge aufweist, so dass mit dieser von der Zahnstange 19 in Richtung der Seitenwange 31 niedergedrückt wird.

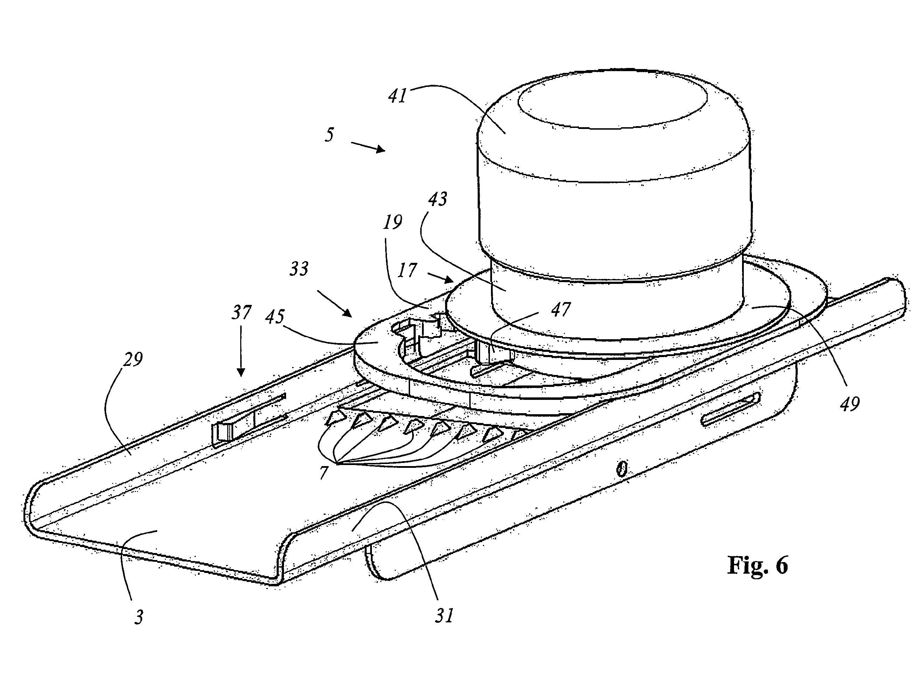

Figur 6 zeigt eine weiter erfindungsgemäße Vorrichtung 1 zum Zerkleinern von Nahrungsmitteln mit einer Gleitbahn 3, die von Seitenwangen 29 und 31 begrenzt ist. Der Halter 5 weist eine Anfassglocke 41 auf, die über einen Einführschacht 43 stülpbar ist. Die Drehvorrichtung 17 beinhaltet einen Gleitrahmen 45, der von den Seitenwangen 29, 31 geführt, hin- und rückbewegbar ist. An einer Längsseite ist der Rahmen 45 als Zahnstange 19 ausgebildet. Seitlich liegt der Gleitrahmen an dem Einführschacht 43, der eine in dieser Zeichnung nicht sichtbare Zahnung aufweist, an. In Längsrichtung ist zwischen dem Einführschacht 43 und dem Gleitrahmen 45 etwas Spiel, so dass die Zahnung des Einführschachts 43 auf der Zahnung der Zahnstange 19 abrollen kann, wenn der Einführschacht 43 das Spiel ausnutzend hin und her bewegt wird.

Die Vorrichtung 1 zum Zerkleinern von Nahrungsmitteln weist ein Arretierungsmittel 33 auf, mit dem der Gleitrahmen 45 bei der Hinbewegung zeitweilig arretierbar ist. Durch Weiterschieben der Anfassglocke 41 und damit des Einführschachts 43 rollt der Einführschacht 43 auf der Zahnstange 19 ab, wodurch eine Drehung des zu zerkleinernden Guts bewirkt wird. Nach erfolgter Drehung wird das Arretierungsmittel 33, das als Federnase ausgeführt ist, von dem Lösemittel 47 beiseite gedrückt und der Gleitrahmen freigegeben. Analog wird der Gleitrahmen bei der Rückbewegung von dem weiteren Arretierungsmittel 37 zeitweilig arretiert und das zu zerkleinernde Gut zurückgedreht. Der Einführschacht 43 weist einen Führungskragen 49 auf, der auf dem Gleitrahmen 45 aufliegt.

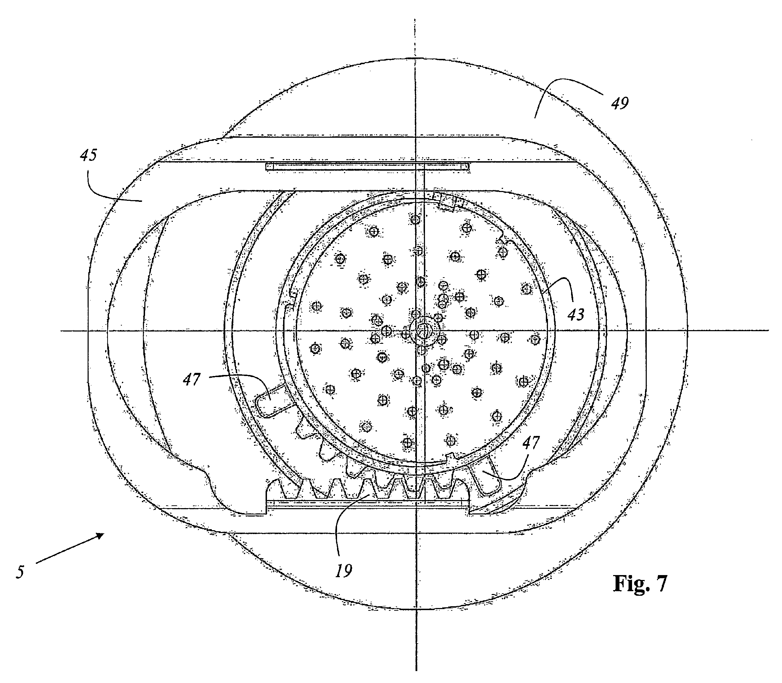

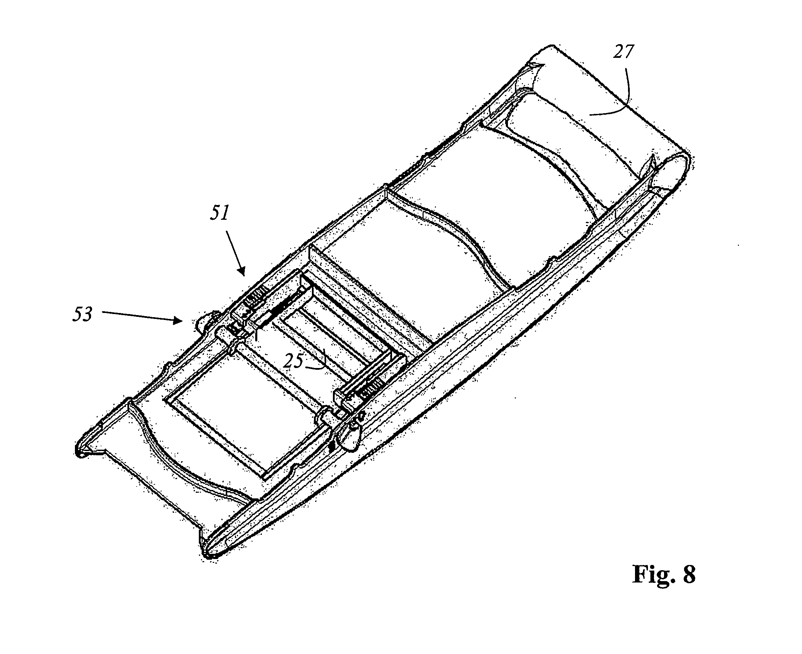

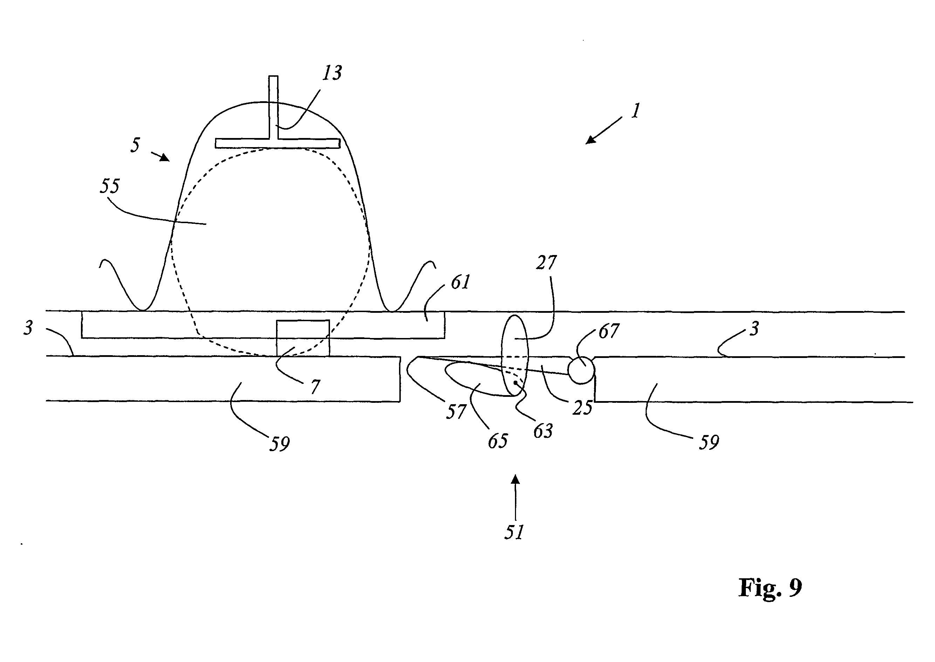

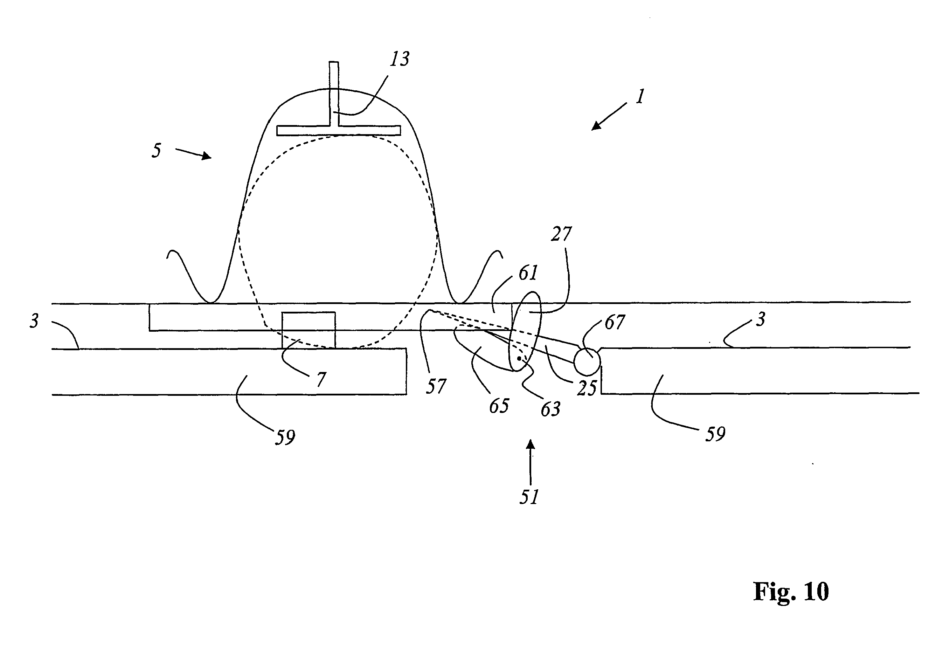

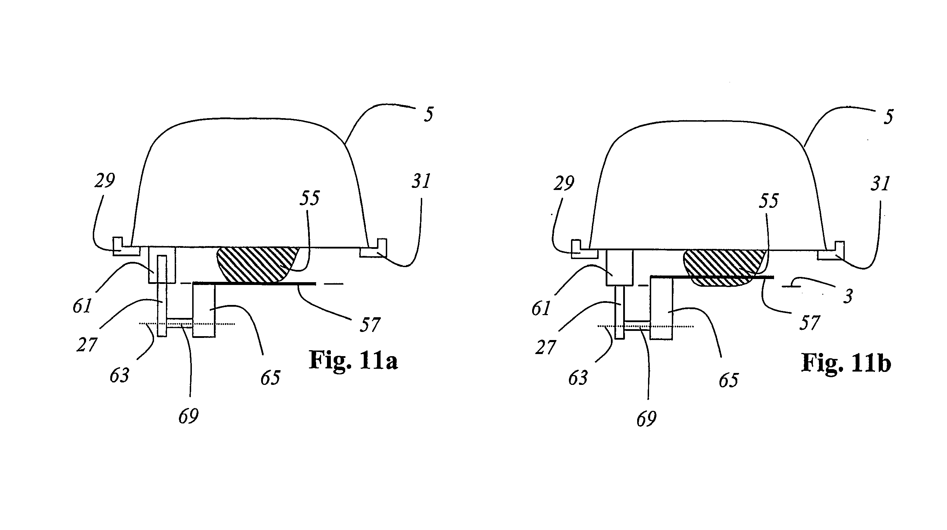

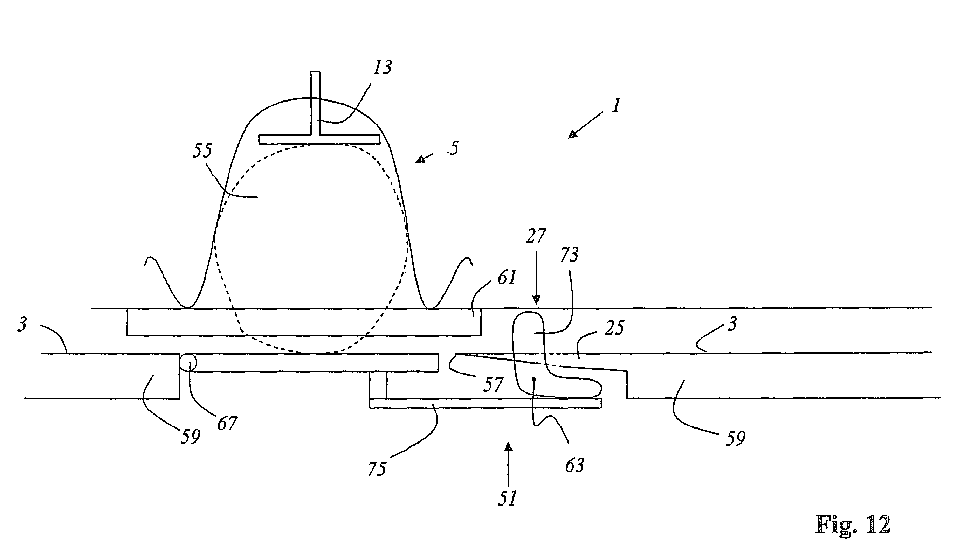

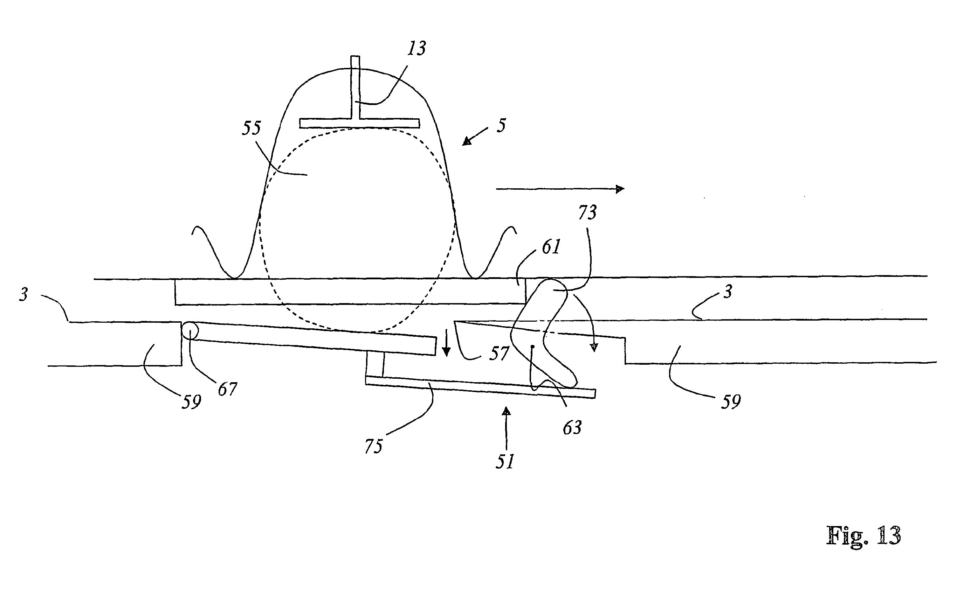

Figur 7 zeigt den Halter 5 der in Figur 6 beschriebenen Vorrichtung 1 zum Zerkleinern von Nahrungsmitteln von unten. Es ist deutlich zu erkennen, dass der Gleitrahmen 45 eine Zahnstange 19 aufweist, in die die Zahnung 23 des Einführschachts 43 eingreift. Am Einführschacht 43 ist ein Mittel 47 zum Lösen der Arretierung 33 und der weiteren Arretierung 37 angebracht.

### Bezugszeichenliste:

- 1: Vorrichtung zum Zerkleinern von Nahrungsmitteln
- 3: Gleitbahn
- 5: Halter
- 7: Schneidmesser
- 9: Anfasshülse
- 11: Grundplatte
- 13: Nachdrückstempel
- 15: Markierung
- 17: Drehvorrichtung
- 19: Zahnstange
- 21: Zähne
- 23: Zahnkranz
- 25: Abschneidmesser
- 27: Handgriff
- 29: Seitenwange
- 31: Seitenwange
- 33: Arretierungsvorrichtung
- 35: Federbügel
- 37: weitere Arretierungsvorrichtung
- 39: weiterer Federbügel
- 41: Anfassglocke
- 43: Einführschacht
- 45: Gleitrahmen
- 47: Lösemittel
- 49: Führungskragen
- 51: Umschaltvorrichtung
- 53: Dickeneinstellvorrichtung
- 55: zu zerkleinerndes Gut
- 57: Schneidkante
- 59: Grundkörper
- 61: Schiene
- 63: Drehachse
- 65: Nocken
- 67: Gelenk
- 69: Drehwelle
- 71: Zuführlippe
- 73: Winkelhebel
- 75: Träger

## Patentansprüche

1. Vorrichtung zum Zerkleinern von Nahrungsmitteln mit einer Gleitbahn (3), auf der zum Ausführen eines Zerkleinerungsvorganges ein zu zerkleinerndes Gut abwechselnd in einer Hin- und Rückbewegung verschiebbar ist, und mit zumindest einem senkrecht zur Gleitbahn (3) angeordneten Schneidmesser (7), über das das zu zerkleinernde Gut führbar und dadurch einschneidbar ist, wobei das zumindest eine Schneidmesser (7) doppelschneidig ausgebildet ist, so dass das zu zerkleinernde Gut sowohl bei der Hinbewegung, als auch bei der Rückbewegung einschneidbar ist,
**dadurch gekennzeichnet, dass** ein Halter (5) für das zu zerkleinernde Gut und eine Drehvorrichtung (17) vorgesehen sind, wobei die Drehvorrichtung (17) den Halter (5) oder die das zu zerkleinernden Gut haltende Teile des Halters (5) nach dem Schneidvorgang der Hinbewegung und vor dem Schneidvorgang der Rückbewegung automatisch dreht.

2. Vorrichtung nach Anspruch 1, **dadurch gekennzeichnet, dass** die Drehvorrichtung das zu zerkleinernde Gut um eine Drehachse dreht die einen rechten Winkel zur Gleitbahn aufweist.

3. Vorrichtung nach Anspruch 1 oder 2, **dadurch gekennzeichnet, dass** die Drehvorrichtung das zu zerkleinernde Gut jeweils nach dem Schneidvorgang der Hinbewegung und vor dem Schneidvorgang der Rückbewegung um 90 Grad dreht.

4. Vorrichtung nach einem der Ansprüche 1 bis 3, **dadurch gekennzeichnet, dass** eine Führung zum Führen des Halters und/oder des zu zerkleinernden Gutes vorgesehen ist.

5. Vorrichtung nach einem der Ansprüche 1 bis 4, **dadurch gekennzeichnet, dass** der Halter und/oder Teile des Halters eine Zahnung aufweist, wobei zumindest eine Zahnstange vorgesehen sein kann, die zumindest während des Drehvorganges in die Zahnung des Halters eingreift.

6. Vorrichtung nach Anspruch 5, **dadurch gekennzeichnet, dass** die zumindest eine Zahnstange relativ zur Gleitbahn und/oder relativ zum Halter beweglich angeordnet ist und/oder dass die Zahnstange gemeinsam zumindest zeitweise zusammen mit dem Halter relativ zur Gleitbahn bewegbar ist.

7. Vorrichtung nach Anspruch 5 bis 6, **dadurch gekennzeichnet, dass** zumindest eine Arretierungsvorrichtung vorgesehen ist, die die Zahnstange zumindest zeitweise relativ zur Gleitbahn fixiert.

8. Vorrichtung nach Anspruch 7, **dadurch gekennzeichnet, dass** zumindest die die Zahnung aufweisenden Teile des Halters auf der Zahnstange abrollen wodurch die Drehung des zu zerkleinernden Gutes bewirkt wird.

9. Vorrichtung nach Anspruch 7 oder 8, **dadurch gekennzeichnet, dass** Mittel zum Lösen der Arretierungsvorrichtung vorgesehen ist.

10. Vorrichtung nach einem der Ansprüche 1 bis 9, **dadurch gekennzeichnet, dass** die Drehvorrichtung das zu zerkleinernde Gut auch nach dem Schneidvorgang der Rückbewegung und vor dem Schneidvorgang der Hinbewegung dreht

11. Vorrichtung nach einem der Ansprüche 1 bis 10, **dadurch gekennzeichnet, dass** die Drehvorrichtung die Drehstellung des zu zerkleinernden Gutes in Abhängigkeit von der Position des zu zerkleinernden Gutes und/oder des Halters des zu zerkleinernden Gutes relativ zur Gleitbahn einstellt.

12. Vorrichtung nach einem der Ansprüche 1 bis 11, **dadurch gekennzeichnet, dass** die Drehvorrichtung die Drehstellung des zu zerkleinernden Gutes in Abhängigkeit von der Bewegungsrichtung des zu zerkleinernden Gutes und/oder des Halters des zu zerkleinernden Gutes einstellt.

13. Vorrichtung nach einem der Ansprüche 1 bis 12, **dadurch gekennzeichnet,**
**dass** die Vorrichtung ein parallel zur Gleitbahn angeordnetes Abschneidmesser aufweist, wobei mit dem Abschneidmesser die vom Schneidmesser eingeschnittenen Teile des zu zerkleinernden Gutes abtrennbar sind.

14. Vorrichtung nach Anspruch 13, **dadurch gekennzeichnet, dass** mit dem Abschneidmesser die vom Schneidmesser eingeschnittenen Teile des zu zerkleinernden Gutes während der Rückbewegung, vorzugsweise nach dem Schneidvorgang des senkrecht zur Gleitbahn angeordneten Schneidmessers, abtrennbar sind.

15. Vorrichtung nach einem der Ansprüche 1 bis 14, **dadurch gekennzeichnet, dass** die Vorrichtung zum Zerkleinern von Nahrungsmitteln als Reibe, insbesondere als Würfelreibe, und/oder als Hobel ausgebildet ist.

## Claims

1. A device for chopping up foodstuffs, comprising a slideway (3) on which, for carrying out a chopping process, goods to be chopped can be displaced in an alternating forward and backward movement, and comprising at least one cutting blade (7) which is arranged perpendicular to the slideway (3) and over which the goods to be chopped up can be guided and can thereby be cut, wherein the at least one cutting blade (7) is formed as a dual blade so that the goods to be chopped up can be cut during the forward movement as well as during the backward movement,
**characterized in that** a holder (5) for the goods to be chopped up and a rotating device (17) are provided, wherein the rotating device (17) automatically rotates the holder (5) or the parts of holder (5) holding the goods to be chopped after the cutting process of the forward movement and prior to the cutting process of the backward movement.

2. The device according to claim 1, **characterized in that** the rotating device rotates the goods to be chopped up about a rotational axis which has a right angle to the slideway.

3. The device according to claim 1 or claim 2, **characterized in that** the rotating device rotates the goods to be chopped up after the cutting process of the forward movement and prior to cutting process of the backwards movement in each case by 90 degrees.

4. The device according to any one of the claims 1 to 3, **characterized in that** a guide for guiding the holder and/or the goods to be chopped up is provided.

5. The device according to any one of the claims 1 to 4, **characterized in that** the holder and/or parts of the holder have a toothing, wherein at least one toothed rack can be provided which engages at least during the rotation with the toothing of the holder.

6. The device according to the claim 5, **characterized in that** the at least one toothed rack is arranged to be movable relative to the slideway and/or relative to the holder and/or that the toothed rack can be moved at least temporarily together with the holder relative to the slideway.

7. The device according to claims 5 to 6, **characterized in that** at least one locking device is provided which fixes the toothed rack at least temporarily relative to the slideway.

8. The device according to claim 7, **characterized in that** at least the parts of the holder having the toothing roll on the toothed rack, whereby the rotation of the goods to be chopped up is effected.

9. The device according to claim 7 or claim 8, **characterized in that** a means for releasing the locking device is provided.

10. The device according to any one of the claims 1 to 9, **characterized in that** the rotating device rotates the goods to be chopped up also after the cutting process of the backward movement and prior to the cutting process of the forward movement.

11. The device according to any one of the claims 1 to 10, **characterized in that** the rotating device sets the rotational position of the goods to be chopped up depending on the position of the goods to be chopped up and/or the holder of the goods to be chopped up relative to the slideway.

12. The device according to any one of the claims 1 to 11, **characterized in that** the rotating device sets the rotational position of the goods to be chopped up depending on the direction of movement of the goods to be chopped up and/or the holder of the goods to be chopped up.

13. The device according to any one of the claims 1 to 12, **characterized in that** the device has a cut-off blade arranged parallel to the slideway, wherein with the cut-off blade, the parts of the goods to be chopped up cut by the cutting blade can be cut off.

14. The device according to claim 13, **characterized in that** with the cut-off blade, the parts of the goods to be chopped up cut by the cutting blade can be cut off during the backward movement, preferably after the cutting process of the cutting blade arranged perpendicular to the slideway.

15. The device according to any one of the claims 1 to 14, **characterized in that** the device for chopping up foodstuffs is formed as grater, in particular as cube grater and/or as slicer.

## Revendications

1. Dispositif de découpe d'aliments, avec une surface de glissement (3), sur laquelle pour réaliser le processus de découpe, un produit à découper peut être déplacé alternativement en va et vient, et avec au moins une lame de découpe (7) disposée à la perpendiculaire de la surface de glissement (3) pardessus laquelle le produit à découper peut être guidé et donc entaillé, l'au moins une lame de découpe (7) étant conçue à double taillant, de sorte que le produit à découper soit entaillé aussi bien au déplacement aller qu'au déplacement retour,
**caractérisé en ce que** sont prévus un support (5) pour le produit à découper et un dispositif de rotation (17), le dispositif de rotation (17) faisant tourner le support (5) ou les parties du support (5) maintenant le produit à découper après le processus de coupe en déplacement aller et avant le processus de coupe en déplacement retour.

2. Dispositif selon la revendication 1, **caractérisé en ce que** le dispositif de rotation fait tourner le produit à découper autour d'un axe de rotation qui présente un angle droit par rapport à la surface de glissement.

3. Dispositif selon la revendication 1 ou 2, **caractérisé en ce que** le dispositif de rotation fait tourner le produit à découper de 90 degrés chaque fois après le processus de coupe en déplacement aller et avant le processus de coupe en déplacement retour.

4. Dispositif selon l'une quelconque des revendications 1 à 3, **caractérisé en ce qu'**il est prévu un guide pour le guidage du support et/ou du produit à découper.

5. Dispositif selon l'une quelconque des revendications 1 à 4, **caractérisé en ce que** le support et/ou des parties du support comportent une denture, au moins une crémaillère étant prévue, qui au moins pendant le processus de rotation s'engage dans la denture du support.

6. Dispositif selon la revendication 5, **caractérisé en ce que** l'au moins une crémaillère est disposée en étant mobile par rapport à la surface de glissement et/ou par rapport au support, et/ou **en ce que** la crémaillère est mobile par rapport à la surface de glissement au moins par moments en commun avec le support.

7. Dispositif selon la revendication 5 ou 6, **caractérisé en ce qu'**au moins un dispositif de blocage est prévu, qui fixe la crémaillère au moins par moments par rapport à la surface de glissement.

8. Dispositif selon la revendication 7, **caractérisé en ce qu'**au moins les parties du support comportant la denture se déroulent sur la crémaillère, ce qui provoque la rotation du produit à découper.

9. Dispositif selon la revendication 7 ou 8, **caractérisé en ce que** des moyens sont prévus pour dégager le dispositif de blocage.

10. Dispositif selon l'une quelconque des revendications 1 à 9, **caractérisé en ce que** le dispositif de rotation fait tourner le produit à découper également après le processus de découpe du déplacement retour et avant le processus de découpe du déplacement aller.

11. Dispositif selon l'une quelconque des revendications 1 à 10, **caractérisé en ce que** le dispositif de rotation règle la position de rotation du produit à découper par rapport à la surface de glissement en fonction de la position du produit à découper et/ou du support du produit à découper.

12. Dispositif selon l'une quelconque des revendications 1 à 11, **caractérisé en ce que** le dispositif de rotation règle la position de rotation du produit à découper en fonction du sens de déplacement du produit à découper et/ou du support du produit à découper.

13. Dispositif selon l'une quelconque des revendications 1 à 12, **caractérisé en ce que** le dispositif comporte une lame de sectionnement disposée à la parallèle de la surface de glissement, les parties du produit à découper entaillées par la lame de découpe étant sectionnables à l'aide de la lame de sectionnement.

14. Dispositif selon la revendication 13, **caractérisé en ce que** des parties du produit à découper entaillées avec le couteau de découpe sont sectionnables à l'aide de la lame de sectionnement, pendant le déplacement retour, de préférence après le processus de découpe des lames de découpe disposées à la perpendiculaire de la surface de glissement.

15. Dispositif selon l'une quelconque des revendications 1 à 14, **caractérisé en ce que** le dispositif de découpe d'aliments est conçu sous la forme d'une râpe, notamment d'une râpe de découpe en cubes et/ou d'une mandoline de cuisine.
